# FASCICULE DE BREVET EUROPEEN

(11) **EP 1 215 088 B1**
(45) Date de publication et mention de la délivrance du brevet: **02.03.2005**
(21) Numéro de dépôt: 01403205.6
(22) Date de dépôt: 11.12.2001
(51) Int. Cl.: B60R 16/02, B60K 37/04

(54) **Ensemble d'équipement de véhicule automobile comportant des moyens de fixation et de connexion électrique améliorés**
Kraftfahrzeugausrüstung enthaltend verbesserte Befestigungs- und elektrische Verbindungsmittel
Motor vehicle equipment assembly comprising improved fixing and electrical connection means

(30) Priorité: 12.12.2000 FR 0016166
(43) Date de publication de la demande: 19.06.2002
(73) Titulaire: Faurecia Industries, 92100 Boulogne-Billancourt (FR)
(72) Inventeur: Bannier, Christine, 25230 Seloncourt (FR); Bocquet, Denis, 90850 Essert (FR); Roudot, Jean-Luc, 25230 Seloncourt (FR); Henigue, Christian, 25400 Audincourt (FR)
(74) Mandataire: Neyret, Daniel

(56) Documents cités:
- US-A- 4 313 584
- US-A- 5 873 749
- US-A- 5 917 152
- US-A- 5 931 682
- US-A- 6 053 758

## Description

L'invention se rapporte au domaine des équipements pour véhicules automobiles.

En particulier, l'invention vise un ensemble d'équipement de véhicule automobile conforme au préambule de la revendication 1.

Un tel ensemble d'équipement est connu de US 5 917 152 A.

Le montage d'un équipement comportant des connexions électriques sur un autre équipement déjà fixé ou pré-positionné sur le véhicule pose d'importants problèmes de manipulation et nécessite des opérations difficilement automatisables. Par exemple, le montage d'un tableau de bord, qui comporte des afficheurs alimentés électriquement, sur la planche de bord, celle-ci étant déjà en place à l'intérieur du véhicule, s'effectue généralement de la façon suivante : l'opérateur approche, par l'intérieur du véhicule, le tableau de bord qui comporte sur sa face arrière un boîtier de connecteur électrique, saisit la contre-partie de connecteur câblée par l'intérieur de la cavité de la planche de bord prévue pour recevoir le tableau de bord; il doit ensuite réaliser l'assemblage des connecteurs tout en maintenant le tableau de bord proche de la cavité réceptrice ou à l'intérieur de celle-ci, la longueur de câble étant prévue avec une faible sur-longeur par rapport à la position assemblée du tableau de bord dans la planche de bord.

Cette manipulation est non seulement complexe, mais non compatible avec la mise en oeuvre d'un procédé d'assemblage automatisé, et constitue par conséquent un obstacle important pour réaliser des gains de productivité.

Un but principal de l'invention est de rendre des opérations d'assemblage du type décrit ci-dessus moins pénibles et plus simples pour un opérateur, voire de rendre l'opération automatisable.

A cet effet, suivant l'invention, l'ensemble d'équipement d'intérieur de véhicule automobile est conforme à la revendication 1.

Suivant d'autres caractéristiques de l'invention :
- les organes de guidage et de positionnement sont des rails complémentaires s'étendant de façon sensiblement rectiligne suivant la direction d'accouplement des parties de connecteur ;
- l'une des parties de connecteur est solidaire d'une plaque de circuit imprimé;
- ladite plaque est une pièce d'aspect, visible depuis l'intérieur du véhicule lorsque l'ensemble est monté sur le véhicule ; et
- l'une au moins des parties de connecteur est un boîtier dans lequel sont logés des contacts.

Suivant un premier mode de réalisation de l'invention, les deux parties de connecteur sont des boîtiers complémentaires l'un de l'autre, dans chacun desquels sont logés des contacts respectifs, complémentaires de ceux logés dans la contrepartie de boîtier de connecteur.

Suivant un deuxième mode de réalisation de l'invention, l'une des parties de connecteur est un boîtier dans lequel sont logés des contacts de type à pression, tandis que l'autre des parties de connecteur comprend une plaque de circuit imprimé présentant des surfaces conductrices, lesdites plaques recevant en appui lesdits contacts de type à pression.

Suivant ce mode de réalisation, avantageusement, une forme de guidage et de positionnement complémentaire de l'organe de guidage et de positionnement associé, est directement formée dans la plaque, de façon à assurer la coopération de la partie de connecteur correspondant à la plaque de circuit imprimé avec ledit organe de guidage et de positionnement.

L'invention, comme cela sera illustré par la suite, s'applique plus particulièrement à la fixation d'un équipement électrique sur une planche de bord, un panneau de porte, une console centrale, un siège ou encore un pavillon.

Cet équipement électrique peut être constitué, comme cela a déjà été mentionné, d'un tableau de bord, mais également d'un auto-radio, d'une console de commande, ou d'un afficheur.

Des exemples de réalisation de l'invention vont maintenant être décrits en regard des dessins annexés sur lesquels :
- la Figure 1 est une vue schématique en perspective, depuis l'intérieur d'un véhicule, d'une planche de bord et d'une partie de connecteur associée suivant un premier mode de réalisation de l'invention, les deux pièces étant représentées séparées ;
- la Figure 2 est une vue analogue d'un tableau de bord et d'une partie de connecteur associée ;
- la Figure 3 est une vue en coupe dans un plan médian des connecteurs passant par l'axe longitudinal des rails de guidage, de l'ensemble constitué par les pièces représentées sur les Figures précédentes, la planche de bord ainsi que le tableau de bord étant pourvus de leurs connecteurs respectifs et prêts à être assemblés ;
- la Figure 4 est une vue de détail agrandie, dans la région du rail de guidage, d'une partie de la planche de bord de la Figure 1 et d'une partie de connecteur associée suivant un deuxième mode de réalisation de l'invention ; et
- la Figure 5 est une vue analogue d'une partie d'un tableau de bord et d'une partie de plaque de circuit imprimé associée suivant un deuxième mode de réalisation de l'invention.

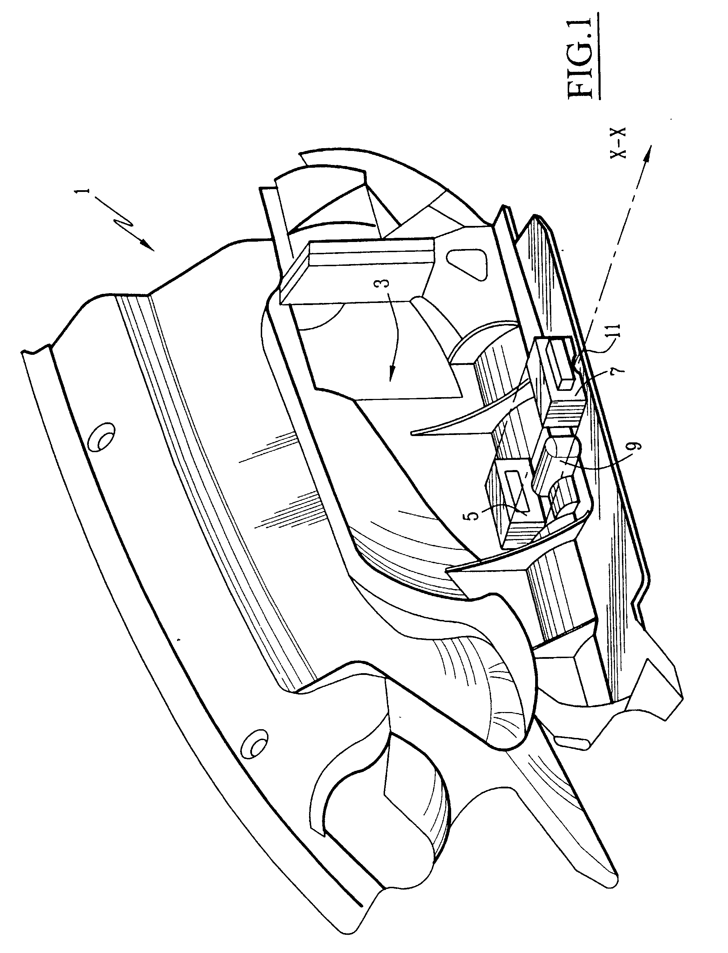

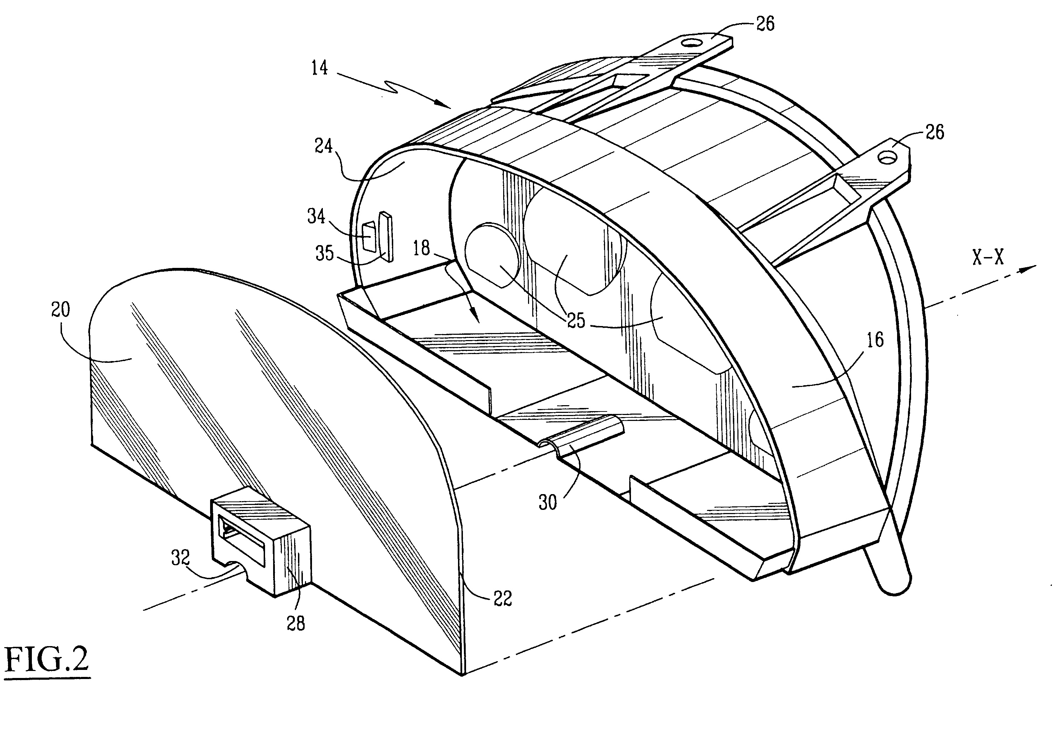

A la Figure 1, on a représenté une partie d'une planche de bord 1, dans laquelle est ménagée une cavité 3. La planche de bord 1 constitue une première pièce d'équipement fixée à l'intérieur du véhicule et destinée à recevoir dans sa cavité 3 une deuxième pièce d'équipement constituée par un tableau de bord, qui sera décrit en référence à la Figure 2.

Sur la planche de bord 1, dans une partie inférieure de la cavité 3, est formé un bloc 5 de réception et de fixation d'un connecteur électrique mâle 7. Le connecteur électrique mâle 7 est représenté seul, étant entendu qu'il est en réalité, dans la configuration représentée, câblé. Le faisceau de câbles relié au connecteur électrique mâle 7 n'est pas représenté, et chemine de façon classique depuis le compartiment moteur jusqu'au connecteur 7 placé, lui, dans l'habitacle, en traversant la cavité 3. Le faisceau de câbles pourrait indifféremment venir de la planche de bord 1 elle-même.

Le bloc de réception et de fixation 5 comporte des moyens de fixation du connecteur électrique mâle 7, de type classique, par exemple des moyens d'encliquetage, de vissage, de sertissage ou autres ; ces moyens de fixation n'ont donc pas été représentés.

Un rail 9 venu de moulage avec la planche de bord 1 s'étend suivant l'axe longitudinal X-X du véhicule depuis le bloc de réception et de fixation 5 en direction de l'habitacle, la direction de l'habitacle étant repérée sur la Figure par l'orientation de l'axe du véhicule X-X. Le rail 9 présente une section transversale en U renversé et coopère avec une encoche 11 de forme complémentaire débouchant sur une face inférieure du connecteur électrique mâle 7.

Le rail 9 constitue un organe de guidage et de positionnement du connecteur électrique mâle 7 par rapport à la planche de bord 1 et en particulier par rapport à la cavité 3. Par coopération de l'encoche 11 avec le rail 9, le connecteur électrique mâle 7 est guidé, lorsqu'on le fixe sur la planche de bords 1, longitudinalement jusqu'au bloc 5, et le positionne de façon précise par rapport à celui-ci.

En référence à la Figure 2, on va maintenant décrire la deuxième pièce d'équipement constituée d'un tableau de bord 14 de forme extérieure complémentaire de la cavité 3.

On a ici encore représenté l'axe longitudinal X-X du véhicule, orienté vers l'habitacle du véhicule.

Le tableau de bord 14 comporte par exemple des afficheurs électriques, des cadrans, qui ne sont pas visibles sur la Figure puisque le tableau de bord 14 est orienté de façon à faire apparaître sa partie destinée à coopérer avec la cavité 3 de la planche de bord 1.

De ce côté, le tableau de bord 14 présente une collerette 16 délimitant un réceptacle 18. Ce réceptacle 18 reçoit une plaque de fond 20 dont les bords extérieurs 22 sont prévus pour coïncider avec les bords intérieurs 24 de la collerette 16.

La plaque de fond 20 étant constituée d'un circuit imprimé dont la face tournée vers l'intérieur du véhicule supporte des témoins lumineux, cadrans ou autres afficheurs, elle constitue une pièce d'aspect visible par un utilisateur placé dans l'habitacle du véhicule. Ces témoins lumineux, cadrans, afficheurs, etc., sont visibles depuis l'intérieur du véhicule au travers de fenêtres 25 par rapport auxquelles ils doivent être positionnés précisément. Il est donc important que la plaque de fond 20 soit positionnée précisément dans le réceptacle 18.

Des organes de fixation classiques 26 du tableau de bord 14 sur la planche de bord 1 sont disposés sur la périphérie extérieure du tableau de bord 14.

La plaque de fond 20 est solidaire d'un connecteur électrique femelle 28 complémentaire du connecteur électrique mâle 7 fixé sur la planche de bord 1.

Sur une face interne inférieure de la collerette 16 du tableau de bord 14, est formé un rail 30 rectiligne s'étendant suivant l'axe longitudinal du véhicule X-X. Le rail 30 présente une section transversale en U renversé complémentaire d'une encoche 32 débouchant sur une face inférieure du connecteur électrique femelle 28.

Le rail 30 constitue un organe de guidage et de positionnement du connecteur femelle 28 et solidairement de la plaque de fond 20 par rapport au tableau de bord 14, puisque le connecteur femelle 28 est susceptible de coulisser à la surface supérieure du rail 30, lors de l'assemblage du connecteur femelle 28 et de la plaque de fond 20 dans le réceptacle 18. Le verrouillage en position de l'ensemble formé par le connecteur femelle 28 et de la plaque de fond 20 est réalisé par des pattes déformables élastiquement 34 disposées sur les bords intérieurs 24 de la collerette 16 et coopérant avec les bords extérieurs 22 de la plaque de fond 20, ainsi que par des butées axiales 35.

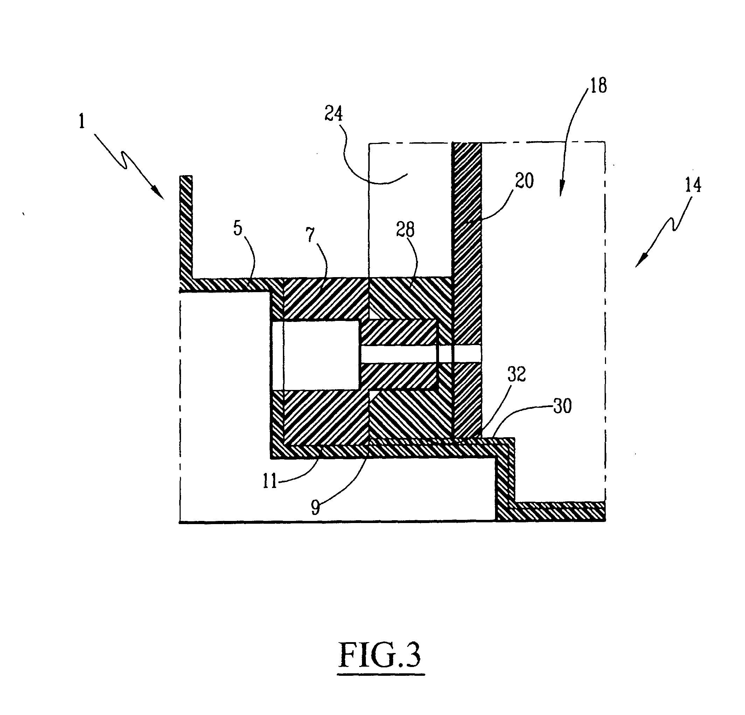

A la Figure 3, on a représenté chacun des sous-ensembles constitués d'une part par la planche de bord 1 et le connecteur électrique mâle associé 7, et d'autre part par le tableau de bord 14 et le connecteur électrique femelle 28 (et solidairement la plaque de fond 20), chacun des sous-ensembles étant en position assemblée.

On a représenté les deux sous-ensembles en regard l'un de l'autre, prêts à être assemblés, de façon que l'on comprenne que le rail 30, par sa surface inférieure est adaptée pour coopérer avec le rail 9. En effet, le sous-ensemble assemblé formé par le tableau de bord 14, le connecteur femelle 28 et la plaque de fond 20 peut coulisser sur le rail 9 jusqu'à la position d'insertion complète du tableau de bord 14 dans la cavité 3 d'une part, et du connecteur électrique mâle 7 dans le connecteur électrique femelle 28 d'autre part.

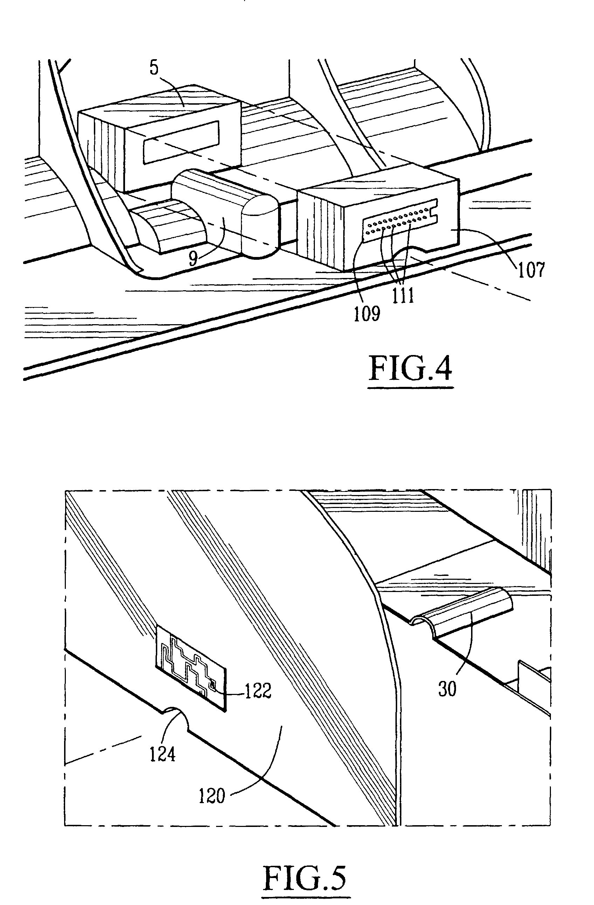

En référence à la Figure 4, on va maintenant décrire un deuxième mode de réalisation de l'invention, dans lequel on substitue une connectique dite « à pression » à la connectique de type « courant » qui fait l'objet du premier mode de réalisation de l'invention, décrit en référence aux Figures 1 à 3.

Sur cette Figure, on n'a représenté de la planche de bord, à une plus grande échelle que celle de la Figure 1, que la région comportant le bloc de fixation 5 et le rail de guidage 9.

La partie de connecteur 107 destinée à venir se fixer sur le bloc 5 est constituée d'un boîtier dans lequel est logé un module porte-contacts 109. Des contacts 111 sont insérés et maintenus dans le module porte-contact 109, lesdits contacts 111 étant de type « à pression », c'est-à-dire qu'ils sont prévus pour coopérer avec une surface conductrice par appui sur celle-ci. Pour cela, les contacts 111 sont montés dans le module porte-contacts 109 de façon à dépasser légèrement dudit module porte-contacts 109 en direction de la contrepartie de connecteur, les deux parties de connecteur étant, lorsqu'elles sont accouplées, maintenues entre elles avec un effort de serrage adapté.

La contrepartie de connecteur associée à la première partie 107 va maintenant être décrite succinctement en référence à la Figure 5.

Sur cette Figure, on a également représenté un tableau de bord du type représenté à la Figure 2, dans sa région comprenant le rail de guidage 30. La deuxième partie de connecteur 120 associée à la première partie 107 est constituée essentiellement d'une plaque de circuit imprimé 120 analogue à la plaque 20 du premier mode de réalisation. Sur cette plaque de circuit imprimé 120 sont formées des pistes conductrices 122 destinées à recevoir en appui les contacts à pression 111.

Les moyens de verrouillage et de serrage mutuels des deux parties de connecteur 107, 120 n'ont pas été représentés, mais on comprend qu'ils peuvent être de tout type adapté, et agir directement ou indirectement sur les parties de connecteur 107, 120.

Une forme de guidage 124 complémentaire du rail 30 est pratiquée directement dans la plaque de circuit imprimé 120 sous la configuration d'une encoche complémentaire du rail 30.

Ce deuxième mode de réalisation illustre que l'invention ne peut être limitée au type le plus courant de connectique, dans lequel les deux parties complémentaires de connecteur sont constituées d'un boîtier mâle et d'un boîtier femelle. Au contraire, l'invention se conçoit pour de nombreux types de connecteurs et d'équipements de véhicule.

On conçoit donc que les organes de guidage et de positionnement 9, 30 permettent non seulement de positionner avec précision le connecteur électrique correspondant 7, 28 ; 107, 120 sur la pièce d'équipement associée 1, 14, mais aussi d'assurer un positionnement précis des connecteurs 7, 28 ; 107, 120 l'un par rapport à l'autre, et simultanément des pièces d'équipement 1, 14 l'une par rapport à l'autre.

Ce positionnement est réalisé par rapport à une référence unique constituée par le rail 9, puisque toutes les pièces de l'ensemble sont centrées sur celui-ci. Il en résulte que l'on résout de façon simultanée, par des moyens communs, les problèmes de positionnement des pièces d'équipement l'une par rapport à l'autre, qui ont un impact important sur l'esthétique de l'intérieur du véhicule, et les problèmes d'alignement des parties de connecteur préalablement à leur accouplement.

## Revendications

1. Ensemble d'équipement de véhicule automobile comportant :
- une première pièce d'équipement (1),
- une deuxième pièce d'équipement (14) adaptée pour être assemblée sur ladite première pièce (1),
- une première partie (7 ; 107) de connecteur électrique fixée sur la première pièce d'équipement (1), et
- une deuxième partie (28 ; 120) de connecteur électrique complémentaire de la première partie (7 ; 107), fixée sur la deuxième pièce d'équipement (14),
chacune desdites pièces d'équipement (1, 14) étant pourvue respectivement d'un premier (9) et deuxième (30) organes de guidage et de positionnement, coopérant respectivement avec les première (7; 107) et deuxième (28 ; 120) parties de connecteur de façon à assurer leur guidage et leur positionnement lors de leur fixation sur la pièce d'équipement (1,14) respective,
**caractérisé en ce que** les premier (9) et deuxième (30) organes de guidage et de positionnement sont complémentaires et adaptés pour coopérer ensemble pour assurer le guidage et le positionnement de la deuxième pièce d'équipement (14) sur la première pièce d'équipement (1) lors de leur assemblage.

2. Ensemble d'équipement suivant la revendication 1, **caractérisé en ce que** les organes de guidage et de positionnement (9, 30) sont des rails complémentaires s'étendant de façon sensiblement rectiligne suivant la direction d'accouplement des parties de connecteur (7, 28 ; 107, 120).

3. Ensemble d'équipement suivant la revendication 2, **caractérisé en ce que** l'une (28 ; 120) des parties de connecteur est solidaire d'une plaque (20 ; 120) de circuit imprimé.

4. Ensemble d'équipement suivant la revendication 3, **caractérisé en ce que** ladite plaque (20 ; 120) est une pièce d'aspect, visible depuis l'intérieur du véhicule lorsque l'ensemble est monté sur le véhicule.

5. Ensemble d'équipement suivant l'une quelconque des revendications 1 à 4, **caractérisé en ce que** l'une au moins (7, 28 ; 107) des parties de connecteur est un boîtier dans lequel sont logés des contacts (111).

6. Ensemble d'équipement suivant la revendication 5, **caractérisé en ce que** les deux parties de connecteur (7, 28) sont des boîtiers complémentaires l'un de l'autre, dans chacun desquels sont logés des contacts respectifs, complémentaires de ceux logés dans la contrepartie (7, 28) de boîtier de connecteur.

7. Ensemble d'équipement suivant les revendications 3 et 5 prises ensemble, **caractérisé en ce que** l'une (107) des parties de connecteur est un boîtier dans lequel sont logés des contacts (111) de type à pression, tandis que l'autre (120) des parties de connecteur comprend une plaque de circuit imprimé présentant des surfaces conductrices (122), lesdites plaques recevant en appui lesdits contacts (111) de type à pression.

8. Ensemble d'équipement suivant la revendication 7, **caractérisé en ce qu'**une forme de guidage et de positionnement (124) complémentaire de l'organe de guidage et de positionnement (30) associé, est directement formée dans la plaque (120), de façon à assurer la coopération de la partie de connecteur correspondant à la plaque de circuit imprimé (120) avec ledit organe de guidage et de positionnement (30).

9. Ensemble d'équipement suivant l'une quelconque des revendications 1 à 8, **caractérisé en ce que** la première pièce d'équipement est une planche de bord (1), un panneau de porte, une console centrale, un siège ou un pavillon.

10. Ensemble d'équipement suivant la revendication 9, **caractérisé en ce que** la deuxième pièce d'équipement est un tableau de bord (14), un auto-radio, une console de commande ou un afficheur.

## Patentansprüche

1. Kraftfahrzeug-Ausrüstungsanordnung, mit:
- einem ersten Ausrüstungsteil (1),
- einem zweiten Ausrüstungsteil (14), das dazu vorgesehen ist, mit dem ersten Teil (1) zusammengesetzt zu werden,
- einem ersten Teil (7;107) eines elektrischen Steckverbinders, der an dem ersten Ausrüstungsteil (1) befestigt ist, und
- einem zweiten Teil (28;120) des elektrischen Steckverbinders, das zu dem ersten Teil (7;107) komplementär ist und an dem zweiten Ausrüstungsteil (14) befestigt ist,
welche Ausrüstungsteile (1,14) jeweils mit einem ersten (9) und einem zweiten (30) Führungs- und Positionierungsorgan versehen sind, die jeweils mit den ersten (7;107) und zweiten (28;120) Steckverbinder-Teilen auf solche Weise zusammenwirken, dass ihre Führung und Positionierung während der Befestigung an dem jeweiligen Ausrüstungsteil (1.14) gesichert wird,
**dadurch gekennzeichnet, dass** die ersten (9) und zweiten (30) Führungs- und Positionierungsorgane komplementär ausgebildet und dazu vorgesehen sind, miteinander zur Sicherung der Führung und der Positionierung des zweiten Ausrüstungsteils (14) an dem ersten Ausrüstungsteil (1) während des Zusammenfügens zusammenzuwirken.

2. Ausrüstungsanordnung gemäß Anspruch 1, **dadurch gekennzeichnet, dass** die Führungs- und Positionierungsorgane (9,30) komplementäre Schienen sind, die sich geradlinig in der Richtung des Zusammenführens der Steckverbinder-Teile (7,28;107,120) erstrecken.

3. Ausrüstungsanordnung gemäß Anspruch 2, **dadurch gekennzeichnet, dass** eines (28;120) der Steckverbinder-Teile mit einer Platine (20;120) mit einem aufgedrucktem Schaltkreis verbunden ist.

4. Ausrüstungsanordnung gemäß Anspruch 3, **dadurch gekennzeichnet, dass** die Platine (20;120) ein Sichtstück ist, das im eingebauten Zustand der Ausrüstung in das Fahrzeug vom Inneren des Fahrzeugs her sichtbar ist.

5. Ausrüstungsanordnung gemäß einem der Ansprüche 1 bis 4, **dadurch gekennzeichnet, dass** zumindest eines der Steckverbinder-Teile (7,28;107) ein Gehäuse ist, in welchem Kontakte (111) untergebracht sind.

6. Ausrüstungsanordnung gemäß Anspruch 5, **dadurch gekennzeichnet, dass** die zwei Steckverbinder-Teile (7,28) zueinander komplementäre Gehäuse sind und dass in jedem von ihnen entsprechende Kontakte untergebracht sind, die zu denjenigen komplementär sind, die in dem Gegenstück (7,28) des Gehäuses des Steckverbinders untergebracht sind.

7. Ausrüstungsanordnung gemäß Anspruch 3 zusammen mit Anspruch 5, **dadurch gekennzeichnet, dass** eines der Steckverbinder-Teile (107) ein Gehäuse ist, in welchem Druckkontakte (111) untergebracht sind, und dass das andere (120) der Steckverbinder-Teile eine bedruckte Schaltkreisplatine umfaßt, die leitende Oberflächen (122) aufweist, auf welchen Platinen sich die Druckkontakte (111) abstützen.

8. Ausrüstungsanordnung gemäß Anspruch 7, **dadurch gekennzeichnet, dass** eine dem zugehörigen Führungs- und Positionierungsorgan (30) komplementäre Führungs- und Positionierungsform (124) direkt in der Platine (120) auf solche Weise ausgebildet ist, dass das Zusammenwirken des Steckverbinder-Teils entsprechend der bedruckten Schaltkreisplatine (120) mit dem Führungs- und Positionierungsorgan (30) gewährleistet wird.

9. Ausrüstungsanordnung gemäß einem der Ansprüche 1 bis 8, **dadurch gekennzeichnet, dass** das erste Ausrüstungsteil ein Armaturenbrett (1), eine Türfüllung, eine Mittelkonsole, ein Sitz oder ein Dach ist.

10. Ausrüstungsanordnung gemäß Anspruch 9, **dadurch gekennzeichnet, dass** das zweite Ausrüstungsteil ein Armaturenbrett (14), ein Autoradio, eine Bedienungskonsole oder eine Anzeige ist.

## Claims

1. Motor vehicle equipment assembly comprising:
- a first piece of equipment (1),
- a second piece of equipment (14) suitable for assembly with said first piece (1),
- a first electrical connector part (7; 107) fixed to the first piece of equipment (1), and
- a second electrical connector part (28; 120) complementary to the first part (7; 107) and fixed to the second piece of equipment (14),
each of said pieces of equipment (1, 14) being provided with respective first (9) and second (30) guide and positioning members which co-operate with the first (7; 107) and second (28; 120) connector parts, respectively, in order to guide and position them when they are fixed to the respective piece of equipment (1, 14),
**characterised in that** the first (9) and second (30) guide and positioning members are complementary and are suitable for co-operating with one another in order to guide and position the second piece of equipment (14) on the first piece of equipment (1) during their assembly.

2. Equipment assembly according to claim 1, **characterised in that** the guide and positioning members (9, 30) are complementary rails extending substantially rectilinearly in accordance with the coupling direction of the connector parts (7, 28; 107, 120).

3. Equipment assembly according to claim 2, **characterised in that** one of the connector parts (28; 120) is integral with a printed circuit board (20; 120).

4. Equipment assembly according to claim 3, **characterised in that** said board (20; 120) is a visible element which can be seen from inside the vehicle when the assembly is fitted to the vehicle.

5. Equipment assembly according to any one of claims 1 to 4, **characterised in that** at least one of the connector parts (7, 28; 107) is a casing in which contacts (111) are housed.

6. Equipment assembly according to claim 5, **characterised in that** the two connector parts (7, 28) are casings which are complementary to one another, in each of which there are housed respective contacts complementary to those housed in the other connector casing (7, 28).

7. Equipment assembly according to claims 3 and 5 taken together, **characterised in that** one of the connector parts (107) is a casing in which there are housed pressure-type contacts (111), while the other connector part (120) comprises a printed circuit board having conductive surfaces (122), said boards receiving said pressure-type contacts (111) pressing thereon.

8. Equipment assembly according to claim 7, **characterised in that** a guide and positioning form (124) complementary to the associated guide and positioning member (30) is formed directly in the board (120), in order to ensure co-operation between the connector part corresponding to the printed circuit board (120) and said guide and positioning member (30).

9. Equipment assembly according to any one of claims 1 to 8, **characterised in that** the first piece of equipment is a dashboard (1), a door panel, a central console, a seat or a roof.

10. Equipment assembly according to claim 9, **characterised in that** the second piece of equipment is an instrument panel (14), a car radio, a control console or a display.
